Europäisches Patentamt

(19) European Patent Office

Office européen des brevets

(11) Publication number: **0 372 796**
**A2**

(12) **EUROPEAN PATENT APPLICATION**

(21) Application number: **89312345.5**

(22) Date of filing: **28.11.89**

(51) Int. Cl.⁵: **A01N 25/12**

(30) Priority: **05.12.88 GB 8828365**

(43) Date of publication of application:
**13.06.90 Bulletin 90/24**

(84) Designated Contracting States:
**AT BE CH DE ES FR GB GR IT LI LU NL SE**

(71) Applicant: **IMPERIAL CHEMICAL INDUSTRIES PLC**
**Imperial Chemical House, Millbank**
**London SW1P 3JF(GB)**

(72) Inventor: **Giffard, Peter Ernest**
**19 Meadow Way**
**Liphook Hampshire(GB)**

(74) Representative: **Bishop, Nigel Douglas et al**
**Imperial Chemical Industries PLC Legal**
**Department: Patents PO Box 6 Bessemer**
**Road**
**Welwyn Garden City Herts, AL7 1HD(GB)**

(54) Process for formulating waxed pellets.

(57) A process for the formulation of an active ingredient in the form of waxed pellets comprising the steps of : either (I) intimately mixing powdered ingredients, powdered concentrate of active ingredient and powdered wax; or alternatively, (II) (a) intimately mixing powdered ingredients excluding the powdered concentrate of active ingredient and powdered wax, (b) blending liquid or powdered concentrate of active ingredient onto the mixed powdered ingredients, (c) adding powdered wax and intimately mixing with the product of b); and thereafter, (III) passing the mixture through a pelletising mechanism, characterised in that the melting point of the powdered wax is such that the wax melts under the heat generated by friction during pelletisation.

EP 0 372 796 A2

## PROCESS FOR FORMULATING WAXED PELLETS

The present invention relates to a process for formulating waxed pellets, and particularly to a process for formulating rodenticide, insecticide or molluscicide baits in the form of waxed pellets. The use of wax in pellet baits imparts a degree of weatherability to the bait and thus enables it to withstand exposure to moisture, for example, rain or dew without swelling and disintegrating.

It is known to use wax in the formulation of blocks, cubes and pellets for use in a number of agrochemical, veterinary and public health uses. Rodenticide baits in the form of wax blocks are known and are commercially available but have previously been produced by a melt and cast process which requires a significant input of energy in the form of heat. The process of the present invention uses a powdered grade of wax which is able to be melted during the formulation process by the heat generated as a consequence of the process, and therefore not requiring any additional energy input.

Conventional commercial processes for making pellets involve either a hot pelletisation process or a cold pelletisation process. The former relies on the use of steam generated externally and used to heat the ingredients thereby liberating gluten from the cereal flower to bind the pellet. The disadvantages of this process are the very large heat energy input required and that the steam puts additional moisture into the pellet which then has to be dried to remove the moisture which encourages mouldiness and is detrimental to the weatherability of the pellet. The cold pelletisation process involves the addition of potato and vegetable starches with water to fuse the ingredients together in the pellet. Again this pellet then requires to be dried out before it is ready for commercial usage.

According to the present invention there is provided a process for the formulation of an active ingredient in the form of waxed pellets comprising the steps of :
either
   I intimately mixing powdered ingredients, powdered concentrate of active ingredient and powdered wax;
or alternatively,
   II a) intimately mixing powdered ingredients excluding the powdered concentrate of active ingredient and powdered wax,
b) blending liquid or powdered concentrate of active ingredient onto the mixed powdered ingredients,
c) adding powdered wax and intimately mixing with the product of b); and thereafter
   III passing the mixture through a pelletising mechanism, characterised in that the melting point of the powdered wax is such that the wax melts under the heat generated by friction during pelletisation.

The wax can be any wax with a suitable melting point, for example, a paraffin wax or alternatively a vegetable or animal wax. The wax used is selected on the basis of its melting point and particle size. The preferred melting points of the wax are from 30°C to 100°C, particularly preferred are from 50°C to 75°C and especially preferred is from 52°C to 58°C, for instance 56°C. The melting point for the particular formulation is chosen on the basis of a number of factors which are described below. The particle size of wax is preferably 1mm (British Standard 16 mesh) or below and the stability and weatherability of the pellet improves as the particle size is decreased. Thus, for example, microcrystalline wax can be used. The particle size is a factor in determining the uniformity with which the wax is distributed in the final pellet. Thus the smaller the particle size the better the uniformity and thus the better the weatherability and storage properties. The most preferred particle size of wax passes through a 0.15mm (British Standard 100 mesh) sieve.

The powdered ingredients generally include but are not limited to a base, hardening agents and optionally, a palatability agent/attractant and a colouring agent. The base can be any cereal flour such as for example, wheatflour, oatflour, maizeflour or rice flour, and the hardening agents include, for example, kaolin, talc, diatomaceous earth and mineral fillers, for example, porcelain (pharmaceutical grade). When the base is a cereal flour or a bait it should be of a quality acceptable for food. A palatability agent/attractant is added when the waxed pellet is used as a bait and depends on the target species, for example, protein hydrolysate, powdered milk or sucrose may be used for attracting field rodents. Similarly, an aversive agent can be included, for example, graphite as a bird aversive agent. Colouring agents may be included to indicate the nature of the active ingredient, for example, Prussian Blue or Acid Red 9. The powdered ingredients are generally 0.25mm (British Standard 60 mesh) or finer to enable the pellet to be tightly bound.

The present process utilises conventional formulation equipment. The powdered ingredients with the exception of the wax, are conveniently intimately mixed using conventional powder blender/mixers, for example rotary or ribbon blenders or a conical mixer. The blended dry mixture is transferred from the blender by means of a conventional metering screw to a pelleting press. The pelleting press which can be horizontal or vertical, involves a spreading cone through which the blended mixture from the metering screw is spread out onto a pelleting die or matrix. The mixture is evenly distributed over the surface of the die and moved to the outside under centrifugal forces created by the rotation of the die. The die is a conventional die for the extrusion of pellets and is preferably from 7.6 cm (3 inches) to 12.7 cm (5 inches) thick. The die has a roller which rotates freely or in the opposite direction to the rotation of the die (i.e. counter-rotates) and forces the blended mixture into extrusion pathways and simultaneously creates frictional forces between itself, the blended mixture and the die. The frictional forces release energy in the form of heat which is transferred to the die which in turn heats up and causes the wax in the blended dry mixture passing through the extrusion pathways to melt and coat the remaining powdered ingredients. The extruded mixture is cut into pellets in the conventional manner by two stationary knives under the die and as the pellets cool rapidly the wax fuses into firm matrix. The pellets are removed by conveyor belt and may be sieved and packed by conventional pellet handling equipment.

The present process is very versatile because of the interdependence of certain factors. Thus, the depth of the die, the composition and texture of the dry powdered mixture, the melting point of the wax and the pressure of the roller on the die, all combine to produce the final desired pellet without any additional energy input and varying one or more factors changes the balance and results in different waxed pellets as required.

The depth of the die and therefore the extrusion pathway is significant in the formation of the pellet because the retention time in the pathway has to be sufficient to melt the wax and allow it to coat the powdered ingredients. The greater the depth of the die (and therefore also the extrusion pathway) the greater the amount of energy transfer needed to get up to the temperature required to melt the wax, although since the depth is greater, the mixture spends longer in the pathway and is therefore exposed to the heat of the die for a longer period.

The composition of the mixture has an effect on the temperature reached by the die. The texture of the composition, i.e. the coarseness and the hardness, is essential to the friction created and the greater the coarseness and/or hardness of the dry powdered mixture, the greater the friction and the heat generated in the die. To lower the amount of friction, and thus the heat generated in the die, the powdered ingredients may be ground more finely or a lubricant may be added, for example, graphite or magnesium stearate.

The melting point of the wax has an affect on the depth of the die required and thus the temperature required to be reached by the die. Thus a low melting point wax may require a shallower die than a higher melting point wax although the temperature reached by the die during the process may be approximately the same.

The temperature reached by the die must be sufficient to melt the wax to coat the powdered ingredients but should be sufficiently low to allow cooling of the extruded mixture quickly on exit from the die. Thus, the temperature reached by the die is preferably from 5 °C to 10 °C above the melting point of the wax. Ideally the pellets should be sufficiently cooled by the atmosphere, but cooling may be applied if necessary, for example, air cooling.

The pressure exerted by the roller on the dry powdered mixture on the surface of the die affects the amount of friction generated and thus the amount of energy transfer to heat the die. Thus the greater the pressure, the greater the energy transfer.

The process involves achieving a balance between these factors which results in the desired composition and size of pellets.

The relationship between the various factors has been described above, but is not limited to those combinations described, indeed the versatility of the process is such that many combinations can be envisaged, for example small pellets may be produced on deep die, thereby normally giving a longer retention time but allowing the production rate for small pellets to be increased because the mixture can be extruded more quickly.

At the start of the process the die must be brought up to temperature. This is done by passing the powdered ingredients through the die and recycling them until the correct temperature is reached.

The pellets are shaped by the process and are preferably cylindrical. The size of the pellet is determined by the distance of the stationary knives below the die. The pellets are generally from 1mm to 30mm in length, i.e. 1mm to 10mm in length for small pellets and 5mm to 30mm in length for large pellets. The diameter of the pellets is determined by the diameter of the extrusion pathway in the die and is generally from 1mm to 20mm in diameter, i.e. 1mm to 5mm for small pellets and 5mm to 20mm for large pellets. The optimum diameters are 2.5mm and 14mm for small and large pellets respectively.

In order to get a uniform melt of the wax during the extrusion, the depth of the die should be longer for large pellets, for example, from 10.2cm (4 inches) to 12.7cm (5 inches), than for small pellets, for example,

3

from 7.6cm (3 inches) to 10.2cm (4 inches). By increasing the depth of the extrusion pathway the retention time in the die is increased allowing the heat to penetrate to the core of the pellet and to melt the wax uniformly. Another method is to slow the rate of extrusion by slowing the speed of the roller, so the mixture spends longer in the die.

The proportion of wax in the pellet can be from 10 to 40% of the total weight and is preferably from 15 to 35% of the total weight and especially from 20 to 30% of the total weight. The amount of wax used in a given pellet compared to the total weight of ingredients is dependent on the size of the pellet, thus a 2.5mm diameter pellet preferably contains approximately 20% by weight of wax and a 14mm diameter pellet preferably contains approximately 30% by weight of wax. This is due to the relationship of heat transfer from the die to the diameter of the pellet. If 30% by weight of wax were used on a 2.5mm diameter small pellet the weatherability would be too high to allow degradability in the field if the bait was unused.

In carrying out the process of the invention the objective is to create a versatile process for the formation of waxed pellets without an external source of heat energy. The heat energy used to melt the wax comes from the friction produced by rolling dry powdered ingredients over the surface of the die.

The liquid or powder active ingredient for example, rodenticide concentrate may be absorbed onto the blended powders by either low-pressure spraying with a fine nozzle and droplet size or gravity drip-feed, into the moving powder bed within the mixer or the metering screw. Finally the powdered wax is added to the mixture of powders impregnated with active ingredient and intimately mixed either in the mixer or in the metering screw. The amount of active ingredient present in the final pellet is preferably from 0.001% (10ppm) to 0.1% (1000ppm) for a rodenticide, from 0.1% (1000ppm) to 10% (100000ppm) for a soil insecticide, and from 1% (10000ppm) to 5% (50000ppm) for a molluscicide.

If the active ingredient is a liquid then it is preferred to add the powdered wax after the active ingredient to avoid the possibility in some cases of the active ingredient being preferentially absorbed by the wax which can be detrimental to the efficacy and palatability of the pellet.

Thus, according to a preferred embodiment of the present invention there is provided a process for the formulation of an active ingredient in the form of waxed pellets comprising the steps of :

a) intimately mixing powdered ingredients,

b) blending liquid or powder concentrate of active ingredient into the mixed powdered ingredients,

c) adding powdered wax and intimately mixing with the product of b); and thereafter passing the mixture through a pelletising mechanism characterised in that the melting point of the powdered wax is such that the wax melts under the heat generated by friction during pelletisation.

The active ingredient is preferably a rodenticide, a soil insecticide, a molluscicide, or an ant deterrent. Examples of rodenticides are brodifacoum, difenacoum, flocumafen, difethialone, bromadialone, chlorphacinone, diphacinone, warfarin and zinc phosphide (zinc phosphide only with low melting point waxes). Examples of soil insecticides are tefluthrin, terbuphos, fonofos, carbofuran and phorate. Examples of molluscicides are metaldehyde and methiocarb. An example of an ant deterrent is borax.

Typical rodents for which the rodenticidal waxed pellet bait is suitable are Rattus species, for example, Rattus rattus and Rattus norvegicus, Mus species, for example, Mus musculus, Micotus species (voles), Arvicolar terrestris, hamsters and squirrels.

The degree of weatherability is controlled by the amount of wax used and the particle size of the wax. The smaller the particle size, the more intimately it can be mixed with the powdered ingredients which enables a more tightly bound pellet to be prepared. The degree of water repellency is also increased.

The wax used in the process is preferably of high purity and with a low free oil content. The free oil is an impurity from the fractionation of paraffin wax and too much free oil prevents the wax from solidifying into a pellet. The maximum free oil content is preferably 5% and the optimum is 1% or less. The acceptance of the waxed pellet as bait by the target species, for example, a rodent is impaired if there are impurities in the wax. It is preferred that the wax is of high purity with a maximum of 5ppm sulphur content in the form of sulphurous compounds.

EXAMPLE 1

Preparation of a waxed pellet containing brodifacoum

A waxed pellet formulation containing the rodenticidal active ingredient, brodifacoum, is prepared by mixing 5 parts by weight of protein hydrolysate, 2 parts by weight of Acid Red 9, 5 parts by weight of kaolin and 67.999 parts by weight of maizeflour in a rotary blender. The ingredients have been pre-ground to powders having less than a 0.25mm (British Standard 60 mesh) particle size. The blender is operated at ambient temperature and the mixing process is continued until the ingredients are intimately mixed (as witnessed by the dispersion of the red colouring agent).

When the mixture is intimately blended, 0.001 parts by weight by weight of brodifacoum is sprayed into the rotary blender and mixing is continued. When the brodifacoum is intimately blended, 20.0% of powdered paraffin wax, 0.15mm particle size or finer (British Standard 100 mesh), melting point 56°C, is added and again mixing is continued to achieve an intimate blend.

After blending, the mixture is discharged into a metering screw at ambient temperature and transferred to the surface of a rotating pelletisation die (a straight-through 2.5mm die) by means of a spreading cone. The die was 8.9 cm (3.5 inches) in depth. The dry powder mixture is extruded through the die by means of a roller rotating in the opposite direction. The pressure of the roller bearing on the die is adjusted to raise the temperature of the die to approximately 66°C. The extruded mixture is cooled by the atmosphere and cut into 5mm lengths by stationary knives under the die.

## EXAMPLE 2

This example presents proportions of ingredients which can be varied within the limits shown to give a pellet suitable as bait for particular target rodents or specific environmental conditions.

| Ingredients | % of total weight |
|---|---|
| Active ingredient | 0.001 to 0.10 |
| Palatability agents/attractants | 0 to 10 |
| Colouring agents | 0 to 5 |
| Hardening agents | 0 to 5 |
| Paraffin Wax | 1.0 to 40.0 |
| Food base (cereal flour) | up to 100 |

## EXAMPLE 3

Example composition for a 2.5 mm pellet containing 0.001% of the active ingredient, brodifacoum (10 ppm).

| Ingredients | parts by weight |
|---|---|
| Brodifacoum (0.25% liquid concentrate) | 0.4 |
| Ground sugar powder (confectionery grade) | 5.0 |
| Kaolin (high purity grade) | 6.0 |
| Whole ground wheat flour | 65.5 |
| Paraffin wax powdered grade m.pt 56°C | 20.0 |
| Graphite (natural amorphous grade) | 3.1 |

## EXAMPLE 4

This example demonstrates a composition for a 5 mm pellet containing 0.005% of the active ingredient, brodifacoum (50ppm).

| Ingredients | parts by weight |
|---|---|
| Brodifacoum (0.25% liquid concentrate) | 2.0 |
| Ground sugar powder (confectionery grade) | 2.0 |
| Milk powder (non-fat skimmed grade) | 3.0 |
| Kaolin (high purity grade) | 2.0 |
| Whole ground wheat flour | 51.0 |
| Ground crushed oats | 15.0 |
| Paraffin wax (powdered grade m.pt 56°C) | 25.0 |

EXAMPLE 5

Example of a composition for an 8 mm pellet containing 0.0025% of the active ingredient, brodifacoum (25ppm).

| Ingredients | parts by weight |
|---|---|
| Brodifacoum (0.25% liquid concentrate) | 1.0 |
| Ground sugar powder (confectionery grade) | 5.0 |
| Kaolin (high purity grade) | 5.0 |
| Whole ground wheat flour | 61.0 |
| Paraffin wax (powdered grade m.pt 56°C) | 25.0 |
| Graphite, natural amorphous grade | 3.0 |

EXAMPLE 6

Example of a composition for a 14 mm pellet containing 0.005% of the active ingredient, brodifacoum (50ppm).

| Ingredients | parts by weight |
|---|---|
| Brodifacoum 0.25% liquid concentrate | 2.0 |
| Ground sugar powder (confectionery grade) | 3.0 |
| Milk powder (non-fat skimmed grade) | 3.0 |
| Kaolin (high purity grade) | 5.0 |
| Whole ground wheat flour | 42.0 |
| Maize flour | 15.0 |
| Paraffin wax (powdered grade m.pt 56°C) | 30.0 |

EXAMPLE 7

6

Example of a composition for a 2.5 mm pellet containing 0.001% of the active ingredient, difenacoum (10ppm).

| Ingredients | parts by weight |
|---|---|
| Difenacoum (0.25% liquid concentrate) | 0.4 |
| Ground sugar powder (confectionery grade) | 3.0 |
| Milk powder (non-fat skimmed grade) | 2.0 |
| Kaolin (high purity grade) | 6.0 |
| Whole ground wheat flour | 65.6 |
| Paraffin wax (powdered grade m.pt 56° C) | 20.0 |
| Graphite, natural amorphous grade | 3.0 |

EXAMPLE 8

Example of a composition for a 5 mm pellet containing 0.005% of the active ingredient, difenacoum (50ppm).

| Ingredients | parts by weight |
|---|---|
| Difenacoum (0.25% liquid concentrate) | 2.0 |
| Ground sugar powder (confectionery grade) | 5.0 |
| Milk powder (non-fat skimmed grade) | 3.0 |
| Kaolin (high purity grade) | 5.0 |
| Whole ground wheat flour | 42.0 |
| Ground crushed oats | 15.0 |
| Paraffin wax (powdered grade m.pt 56° C) | 25.0 |
| Graphite, natural amorphous grade | 3.0 |

EXAMPLE 9

Example of a composition for a 2.5 mm pellet containing 0.003% of the active ingredient, bromodialone (30ppm).

| Ingredients | parts by weight |
|---|---|
| Bromodialone 0.25% liquid concentrate | 1.2 |
| Ground sugar powder (confectionery grade) | 4.0 |
| Milk powder (non-fat skimmed grade) | 2.0 |
| Kaolin (high purity grade) | 7.0 |
| Whole ground wheat flour | 62.8 |
| Paraffin wax (powdered grade m.pt 56° C) | 20.0 |
| Graphite (natural amorphous grade) | 3.0 |

7

## EXAMPLE 10

This example presents proportions of ingredients which can be varied within the limits shown to give a pellet suitable for application of a soil insecticide, in this case, carbofuran.

| Ingredients | % of total weight |
|---|---|
| carbofuran | 0.1 to 10 |
| Colouring agents | 0 to 5 |
| Hardening agents | 0 to 50 |
| Paraffin Wax | 1.0 to 40.0 |
| Food base | up to 100 |

The formulation of this example can be used with minor amendments for use with other soil insecticides, for example tefluthrin and terbuphos.

## EXAMPLE 11

This example presents proportions of ingredients which can be varied within the limits shown to give a pellet suitable for application of a molluscicide, in this case, methiocarb.

| Ingredients | % of total weight |
|---|---|
| methiocarb | 1 to 5 |
| Colouring agents | 0 to 5 |
| Palatability agents/attractants | 0 to 20 |
| Hardening agents | 0 to 5 |
| Paraffin Wax | 1.0 to 40.0 |
| Food base | up to 100 |

The formulation of this example can be used with minor amendments for use with other molluscicides, for example, metaldehyde.

**Claims**

1. A process for the formulation of an active ingredient in the form of waxed pellets comprising the steps of :

either

I intimately mixing powdered ingredients, powdered concentrate of active ingredient and powdered wax;

or alternatively,

II a) intimately mixing powdered ingredients excluding the powdered concentrate of active ingredient and powdered wax,

b) blending liquid or powdered concentrate of active ingredient onto the mixed powdered ingredients,

c) adding powdered wax and intimately mixing with the product of b); and thereafter

III passing the mixture through a pelletising mechanism, characterised in that the melting point of the

8

powdered wax is such that the wax melts under the heat generated by friction during pelletisation.

2. A process according to claim 1 comprising the steps of:

a) intimately mixing powdered ingredients,

b) blending liquid or powder concentrate of active ingredient into the mixed powdered ingredients,

c) adding powdered wax and intimately mixing with the product of b); and thereafter

then passing the mixture through a pelletising mechanism characterised in that the melting point of the powdered wax is such that the wax melts under the heat generated by friction during pelletisation.

3. A process according to claim 1 or claim 2 wherein the melting point of the wax is from 30°C to 100°C.

4. A process according to claims 1 to 3 wherein the wax is a paraffin wax.

5. A process according to claim 4 wherein the wax is paraffin wax with a melting point of 56°C.

6. A process according to any of the preceding claims wherein the particle size of the wax is 0.15.mm (British Standard 100 mesh) or finer.

7. A process according to any of the preceding claims wherein the waxed pellets made by the process are from 1mm to 30mm in length.

8. A process according to any of the preceding claims wherein the waxed pellets made by the process are from 1mm to 20mm in diameter.

9. A process according to any of the preceding claims wherein the proportion of wax is from 10 to 40 parts by weight of the total pellet weight.

10. A process according to any of the preceding claims wherein the particle size of the powdered ingredients is 1mm (British Standard 16 mesh) or finer.

11. A process according to any of the preceding claims wherein the active ingredient is a rodenticide.

12. A process according to claim 10 wherein the active ingredient is brodifacoum or difenacoum.

13. A process according to claims 1 to 9 wherein the active ingredient is a soil insecticide.

14. A process according to claims 1 to 9 wherein the active ingredient is a molluscicide.

15. A pellet when made by the process according to any of the preceding claims.